(19) Europäisches Patentamt
European Patent Office
Office européen des brevets

(11) Publication number: **0 371 154 A1**

# (12) EUROPEAN PATENT APPLICATION

(21) Application number: **88119804.8**

(22) Date of filing: **28.11.88**

(51) Int. Cl.5: **C08J 5/24, C08L 79/08, C08G 73/10**

(30) Priority: **27.11.87 JP 297668/87**

(43) Date of publication of application: **06.06.90 Bulletin 90/23**

(84) Designated Contracting States: **DE FR GB**

(71) Applicant: **UBE INDUSTRIES, LTD.**
**12-32, Nishihonmachi 1-chome**
**Ube-shi, Yamaguchi-ken 755(JP)**

(72) Inventor: **Yamamoto, Shinji c/o Hirakata Laboratories**
**Ube Industries, Ltd. 3-10, Nakamiya-kita-machi**
**Hirakata-shi Oosaka(JP)**
Inventor: **Tanaka, Hideho c/o Hirakata Laboratories**
**Ube Industries, Ltd. 3-10, Nakamiya-kita-machi**
**Hirakata-shi Oosaka(JP)**
Inventor: **Fujii, Kazuyoshi c/o Hirakata Laboratories**
**Ube Industries, Ltd. 3-10, Nakamiya-kita-machi**
**Hirakata-shi Oosaka(JP)**

(74) Representative: **Kraus, Walter, Dr. et al**
**Patentanwälte Kraus, Weisert & Partner**
**Thomas-Wimmer-Ring 15**
**D-8000 München 22(DE)**

## (54) Prepreg of reinforced imide oligomer.

(57) A prepreg appropriately employable for the preparation of a fibrous material-reinforced polyimide article comprises a specific terminal-modified imide oligomer and a reinforcing fiber. The terminal-modified imide oligomer is a product of reaction of a biphenyltetracarboxylic acid (e.g., 3,3′,4,4′- or 2,3,3′,4′-biphenyltetracarboxylic acid) or its derivative, an aromatic diamine and an unsaturated monoamine.

EP 0 371 154 A1

# PREPREG OF REINFORCED IMIDE OLIGOMER

## BACKGROUND OF THE INVENTION

### Field of the invention

This invention relates to a prepreg comprising a specific terminal-modified imide oligomer which has a functional group capable of undergoing addition polymerization (i.e., cross-linking reaction) as a terminal group and further has an imide main chain bonding in the molecular structure, and a reinforcing fiber.

The prepreg has high moldability and can be used for the preparation of a composite article having high mechanical strength and high heat resistance. Accordingly, it is widely employable, for example, in aviation industries and aerospace industries.

### Description of prior art

Polyimide resins have been heretofore employed as matrix resins of various molded (or shaped) products or fiber-reinforced composite articles, because they show high heat resistance.

However, the known polyimide resins (specifically, aromatic polyimides) are generally poor in solubility in an organic solvent, so that they are produced as a prepreg of a polyamic acid (namely, polyimide precursor) matrix by impregnating a solution of the polyamic acid into reinforcing fibers and drying thus treated fibers under heating. Since the prepreg of a polyamic acid matrix is subjected to condensation reaction, there arise various problems for removing vapors such as water (i.e., reaction water) which is produced in the curing process of a polymer in the preparation of molded products.

In view of those problems, there has been recently proposed as a resin for preparing a prepreg, for example, a polyimide resin of addition type having an unsaturated terminal group (i.e., end group) which is produced by a reaction of (a) an aromatic tetracarboxylic dianhydride such as pyromellitic dianhydride and benzophenonetetracarboxylic dianhydride, (b) an aromatic diamine and (c) an unsaturated reactive compound, for instance, as described in Japanese Patent Provisional Publications No. 59(1984)-167569, No. 60-(1985)-250030, No. 60(1985)-260624, No. 60(1985)-260625, No. 61(1986)-247733, and No. 62(1987)-29584.

However, the above-mentioned known polyimide resins also have various drawbacks. For example, a specific diamine compound which is expensive and not easily available should be used in the preparation of the polyimide resins, or the resulting polymer is not always high in solubility in an organic solvent. Otherwise, a specific organic solvent having a high boiling point is necessarily employed in the preparation of a polyimide solution. In addition, a melting point of the obtained polyimide resin becomes too high, whereby the quality of a product lowers in the preparation from the polyimide resin.

More specifically, when a solution containing polyimide of high melting point at a low concentration is impregnated into reinforcing fibers (i.e., fibrous material for reinforcement) to produce a composite article (i.e., composite material), the impregnation of the solution into the reinforcing fibers should be repeated several times to reach an aimed resin content, or voids are easily formed in the resulting composite material because high temperatures are required in the molding process.

## SUMMARY OF THE INVENTION

The object of the present invention is to provide a novel prepreg having high moldability which is capable of producing a composite article, high mechanical strength and high heat resistance.

Another object of the invention is to provide a novel prepreg comprising a reinforcing fiber and an imide oligomer of an aromatic tetracarboxylic acid type which is capable of undergoing addition polymerization, is free from the above-described various problems, has a high solubility in a solvent and a low melting point, and is widely employable in practical use.

The present invention provides a prepreg comprising a terminal-modified imide oligomer and a reinforcing fiber, said imide oligomer being produced by reacting (a) a biphenyltetracarboxylic acid or its derivative, (b) an aromatic diamine and (c) an unsaturated monoamine, and having an unsaturated group as

a terminal group and an imide bonding inside of the oligomer.

The prepreg of the invention can be prepared from a terminal-modified imide oligomer and a reinforcing fiber. Further, a cured product (i.e., molded or shaped article) of a composite material obtainable from the the prepreg of the invention has a thermal decomposition initiation temperature of not lower than 360° C and a second-order transition temperature (Tg) of not lower than 250° C. Accordingly, the cured product shows excellent heat resistance.

## DETAILED DESCRIPTION OF THE INVENTION

The prepreg of the present invention can be obtained by impregnating a solution composition of a terminal-modified imide oligomer containing the above-mentioned terminal-modified imide oligomer homogeneously dissolved in an organic polar solvent at a concentration of 3 - 80 wt.% into reinforcing fibers, and drying the impregnated fibers in an oven at approx. 50 to 200° C for approx. 3 to 60 minutes.

The impregnation of the solution of imide oligomer into the reinforcing fibers can be conducted by any of known processes such as a continuous process or a batch process. The temperature for the impregnation is preferably in the range of approx. 0 to 100° C, more preferably 0 to 50° C.

The prepreg of the invention can contain a volatile material such as an organic solvent in an amount of 1 to 30 wt.%, preferably 1-15 wt.%, more preferably 2-10 wt.%.

The terminal-modified imide oligomer employable in the invention is an imide oligomer obtainable by reacting (a) a biphenyltetracarboxylic acid (e.g., 3,3′,4,4′- or 2,3,3′,4′-biphenyltetracarboxylic acid), its derivative such as its anhydride or its ester, (b) an aromatic diamine, and (c) an unsaturated monoamine in an organic solvent in such a manner that the total amount of acid groups of all components are essentially equal to the total amount of amino groups of all components, and has an unsaturated terminal group (i.e., end group) such as ethylenic group which is polymerizable in addition reaction and at least one imide bonding (preferably a number of imide bondings) inside (in main chain) thereof.

The terminal-modified imide oligomer generally has a logarithmic viscosity of not more than 1.0, preferably in the range of approx. 0.01 to 0.8, more preferably in the range of approx. 0.03 to 0.7. This means that the imide oligomer has a relatively low molecular weight. The melting point of the terminal-modified imide oligomer is in the range of 50 to 300° C, preferably in the range of 60 to 260° C. Further, the imide oligomer is preferably in the solid (powdery) state at room temperature (25° C), and shows high solubility in an organic polar solvent.

Examples of the aforestated 3,3′,4,4′- or 2,3,3′,4′-biphenyltetracarboxylic acid and its derivative include 3,3′,4,4′-biphenyltetracarboxylic acid, 3,3′,4,4′-biphenyltetracarboxylic dianhydride (s-BPDA), their other derivatives such as lower alcohol esters thereof and salts thereof, 2,3,3′,4′-biphenyltetracarboxylic acid, 2,3,3′,4′-biphenyltetracarboxylic dianhydride (a-BPDA), and their other derivatives such as lower alcohol esters thereof and salts thereof. Particularly preferred is 3,3′,4,4′- or 2,3,3′,4′-biphenyltetracarboxylic dianhydride.

In the invention, the above-mentioned 3,3′,4,4′- or 2,3,3′,4′-biphenyltetracarboxylic acid or its derivative can be partially (preferably not more than 30 molar %, more preferably not more than 20 molar %, most preferably not more than 10 molar %) substituted by other aromatic tetracarboxylic acids or their derivatives such as 3,3′,4,4′-benzophenonetetracarboxylic dianhydride (BTDA), pyromellitic dianhydride (PMDA), 2,2-bis(3′,4′-dicarboxyphenyl)propane dianhydride, bis(3,4-dicarboxyphenyl)methane dianhydride, bis(3,4-dicarboxyphenyl)ether dianhydride, bis(3,4-dicarboxyphenyl)thioether dianhydride, bis(3,4-dicarboxyphenyl)-phosphine dianhydride and bis(3,4-dicarboxyphenyl)sulfone dianhydride, or aliphatic tetracarboxylic acids such as butanetetracarboxylic dianhydride.

Examples of the aforementioned aromatic diamine are as follows:

[A] Diamine compound having one aromatic ring

i) phenylenediamine compounds such as p-phenylenediamine, o-phenylenediamine and m-phenylenediamine;

ii) xylylene diamines such as m-xylylenediamine and p-xylylenediamine;

and

iii) trialkylbenzene diamines such as 3,5-diethyltoluene-2,4-diamine (2,4-DETDA), 3,5-diethyltoluene-2,6- diamine (2,6-DETDA), 2,6-diethyl-4-methyl-1,3-diaminobenzene and 4,6-diethyl-2-methyl-1,3-diaminobenzene.

[B] Diamine compound having two aromatic rings

i) benzidine compounds such as 3,3′-dimethylbenzidine and 3,3′-dimethoxybenzidine;

ii) diphenylether diamines such as 4,4′-diaminodiphenylether, 3,4′-diaminodiphenylether and 3,3′-diaminodiphenylether;

iii) diphenylthioether diamines such as 4,4′-diaminodiphenylthioether, 3,4′-diaminodiphenylthioether and 3,3′-diaminodiphenylthioether;

iv) benzophenone diamines such as 4,4′-diaminobenzophenone, 3,4′-diaminobenzophenone and 3,3′-diaminobenzophenone;

v) diphenylsulfine diamines such as 4,4′-diaminodiphenylsulfine, 3,4′-diaminodiphenylsulfine and 3,3′-diaminodiphenylsulfine;

vi) diphenylsulfide diamines such as 4,4′-diaminodiphenylsulfide, 3,4′-diaminodiphenylsulfide and 3,3′-diaminodiphenylsulfide;

vii) diphenylalkane diamines such as 3,3′-diaminodiphenylmethane, 4,4′-diaminodiphenylmethane (DADM), bis(2,6-diethyl-4-aminophenyl)methane, 4,4′-methylene-bis(2,6-diethylaniline) (M-DEA), bis(2-ethyl-6-methyl-4-aminophenyl)methane, 4,4′-methylene-bis(2-ethyl-6-methylaniline) (M-MEA) 2,2-bis (3-aminophenyl )propane, 2,2-bis(4-aminophenyl)propane, 2,2-bis(3-chloro-4-aminophenyl)propane and 2,2-bis-(3-amino-4-hydroxyphenyl)hexafluoropropane (BHFP);

viii) bis(phenoxy)propane diamines such as 2,2-bis(4′-aminophenoxy)propane and 2,2-bis(3′-aminophenoxy)propane;

and

ix) diphenylsulfone diamines such as 3,3′-diaminodiphenylsulfone (3,3′-DDS) and 4,4′-diaminodiphenylsulfone.

[C] Diamine compound having three aromatic rings

i) bis(phenoxy)benzene diamines such as 1,3-bis(4-aminophenoxy)benzene (TPE-R), 1,3-bis(3-aminophenoxy)benzene, 1,4-bis(4-aminophenoxy)benzene (TPE-Q) and 1,3-bis(4-aminophenoxy)benzene.

[D] Diamine compound having four aromatic rings

i) bis[(phenoxy)phenyl]propane diamines such as 2,2-bis[4-(4-aminophenoxy)phenyl]propane (BAPP) and 2,2-bis[4-(4-aminophenoxy)phenyl]hexafluoropropane (BAFP);

and

ii) bis(phenoxy)diphenylsufone diamines such as 4,4′-bis(4-aminophenoxy)diphenylsulfone, bis[4-(4-aminophenoxy)phenyl]sulfone (4-BAPS), 4,4′-bis(3-aminophenoxy)diphenylsulfone and bis[4-(3-aminophenoxy)phenyl]sulfone (3-BAPS).

The above-mentioned diamine compounds can be used singly or in the form of a mixture thereof.

As a portion of the diamine compound for the preparation of a terminal-modified imide oligomer employed in the invention, a polymeric diamine such as $\alpha,\omega$-polysyloxanediamine, polyoxypropylenediamine or polyethylene glycol aniline can be employed.

The aforementioned unsaturated monoamine is a reactive unsaturated monoamine compound which simultaneously has (i) an unsaturated group (cross-linking group) such as a carbon-carbon double bond (e.g., ethylene group) or a carbon-carbon triple bond (e.g., acetylene group), and a monoamino group (i.e., primary amino group); and forms an imide bond upon reaction with a pair of adjacently positioned carboxyl groups.

Examples of the unsaturated monoamine compounds are as follows:

(a) aliphatic monoamine compounds such as propargylamine (PA), 3-aminobutyne, 4-aminobutyne, 5-aminopentyne, 6-aminohexyne, 7-aminoheptyne, 4-amino-3-methylbutyne, 4-aminopentyne and allylamine (AA);

and

(b) aromatic monoamine compounds such as m-aminostyrene, p-aminostyrene, m-amino-$\alpha$-methylstyrene, 1-isopropenyl-3-(2-aminoisopropyl)benzene, 1-isopropenyl-4-(2-aminoisopropyl)benzene, 3-aminophenylacetylene and 4-aminophenylacetylene.

The above-mentioned unsaturated monoamine compounds can be employed singly or in combination in the invention.

Examples of the organic polar solvents used for the preparation of a terminal-modified imide oligomer or a solution composition of the imide oligomer employed in the present invention include amide solvents such as N,N-dimethylformamide, N,N-dimethylacetamide, N-methyl-2-pyrrolidone (NMP) and N-methylcaprolactam; solvents containing sulfur atom such as dimethylsulfoxide, hexamethylphosphoramide, dimethylsulfone, tetramethylenesulfone and dimethyltetramethylenesulfone; phenol solvents such as cresol and phenol; organic polar solvents having oxygen atom in the molecular structure such as dioxane, methyl ethyl ketone, monoglyme, diglyme, and ethylene glycol; and other organic polar solvents such as pyridine and tetramethyl urea.

As the organic polar solvent used for the preparation of a solution composition according to the invention, the above-mentioned organic polar solvents can be also employed, and if necessary, other organic polar solvents such as benzene, toluene, xylene, solvent naphtha, benzonitrile, acetone and methanol can be used in combination therewith.

The terminal-modified imide oligomer of the present invention can be prepared, for example, by the following process. The aforementioned 3,3′,4,4′- or 2,3,3′,4′-biphenyltetracarboxylic acid or its derivative (preferably, acid dianhydride thereof), aromatic diamine and unsaturated monoamine are used in such a manner that the whole amount of acid anhydride groups (or adjacently positioned dicarboxylic acids) in all components is essentially equal to the whole amount of amino groups in all components. These components are caused to react with each other in the aforementioned organic polar solvent at a temperature of approx. not higher than 100°C, preferably not higher than 80°C, to produce "an oligomer having amide-acid bond". Then, the amide-acid oligomer (also referred to as "amic acid oligomer") is subjected to dehydration-ring closure reaction in the presence of an imidating agent at a low temperature of approx. 0 to 140°C or by heating at a high temperature of 140 to 250°C, to produce an imide oligomer having an unsaturated group (specifically ethylenic group) at the terminal which is capable of undergoing addition-polymerization reaction.

As the particularly preferred process for the preparation of the terminal-modified imide oligomer, there can be mentioned, for example, a process comprising homogeneously dissolving 3,3′,4,4′- or 2,3,3′,4′-biphenyltetracarboxylic dianhydride, a diamine compound and an unsaturated monoamine compound in the aforementioned organic polar amide solvent, causing them to react with each other at approx. 5 to 60°C for 1 to 120 minutes under stirring to produce an amic acid oligomer, then raising the temperature of the resulting reaction liquid to 140 to 250°C, preferably 150 to 200°C, keeping the temperature of the liquid under stirring for 5 to 180 minutes to produce an imide oligomer through imidation reaction of the amic acid oligomer, and finally cooling the reaction liquid to around room temperature. It is preferred to carry out the above-mentioned reaction in an inert gas atmosphere such as an nitrogen gas atmosphere or an argon gas atmosphere.

The terminal-modified imide oligomer prepared as above can be used in the form of a powdery product. For obtaining the powdery imide oligomer, the above-obtained reaction liquid is poured into water, etc., and the terminal-modified imide oligomer is isolated from the resulting mixture in the form of a powdery product. Thus obtained powdery imide oligomer can be utilized, if necessary, after it is dissolved in an organic polar solvent. Otherwise, the terminal-modified imide oligomer can be used in the form of a solution composition containing said oligomer without isolating the oligomer from the reaction liquid. For example, the above-obtained reaction liquid *per se* may be used, or the reaction liquid may be appropriately concentrated or diluted.

An example of the terminal-modified imide oligomers of the invention is an imide oligomer having the formula (I):

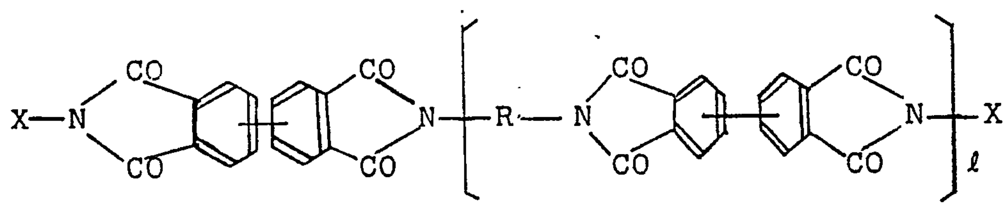

(I)

wherein X is a monovalent group which is formed by removing an amino group from a monoamine compound having an unsaturated group; ℓ is an integer of 1 to 80, particularly an integer of 1 to 50; and R is a divalent group which is formed by removing an amino group from an aromatic diamine compound.

A product obtained by the aforementioned process for the preparation of a terminal-modified imide oligomer contains imide oligomers having the formula (I) in various composition ratio depending upon the

composition of the starting materials.

The solution composition used in the preparation of a prepreg of the invention contains the above-mentioned terminal-modified imide oligomer in a concentration of 3 to 80 wt.%, preferably 5 to 60 wt.%, which is homogene ously dissolved in an organic polar solvent, particularly in the solvent used in the preparation of the aforementioned terminal-modified imide oligomer such as organic polar amide solvents (e.g., N,N-dimethylformamide, N,N-dimethylacetamide, N-methyl-2-pyrrolidone and N-methylcaprolactam), organic polar solvents having sulfur atom (e.g., dimethylsulfoxide and dimethylsulfone), and phenol solvents (e.g., phenol, cresol and halogenated phenol).

The solution composition preferably has a solution viscosity (viscosity measured at 25° C by a rotation viscometer of Brookfield type; polymer concentration: 20 wt.%) of 0.1 to 200 poise, more preferably 0.5 to 100 poise, most preferably 10 to 80 poise.

The aforementioned terminal-modified imide oligomer obtained using an aromatic diamine compound such as 4,4′-methylene-bis(2,6-diethylaniline) (M-DEA) or 4,4′-methylene-bis(2-ethyl-6-methylaniline) (M-MEA) can be dissolved in solvents such as methanol, methyl ethyl ketone, methyl isobutyl ketone, dioxane, monoglyme, diglyme and pyridine in an amount of not less than 3 wt.%, particularly 5 to 60 wt.%. Accordingly, a solution composition of the imide oligomer and the aforementioned solvent can be readily prepared, and thus prepared solution composition is very stable.

Examples of the reinforcing fibers employable in the invention include glass fiber, PAN carbon fiber, pitch carbon fiber, aramide fiber, silicon carbide fiber and Si-Ti-C-O fiber (e.g., TIRANO FIBER, trade name of Ube Industries, Ltd.). Those fibers can be employed singly or in combination in the invention. The above-mentioned reinforcing fibers may be subjected to a known treatment such as surface treatment or sizing treatment.

In the invention, the reinforcing fiber can be used in the form of a strap in which fibers are horizontally drawn in one direction or in the form of a bundle fibers. Otherwise, the fiber may be used in the form of woven or nonwoven fabric.

The prepreg of the invention may contain a variety of fillers, additives, pigments, etc.

The prepreg of the invention is subjected to appropriate various processes to obtain a final molded product. For example, the prepreg laminated in plural layers are pressed, and then heated at a temperature of approx. 200 to 400° C, preferably 220 to 380° C, for approx. 1 to 30 hours, preferably 1.5 to 25 hours, (if necessary, under pressure), to melt (thermal-deform) the prepreg with removing the solvent from the prepreg. Thus, a final molded product of composite material can be obtained.

In the preparation of the molded product, a variety of known methods such as a reduced pressure back/autoclave curing method, a hot press molding method and a sheet winding method can be utilized. In the preparation of a composite material, the heat-cured product may be further cured (post-cured) at a temperature of not higher than a thermal decomposition temperature of the composite material, preferably not higher than 400° C, in an autoclave (if desired, under pressure) after the above-mentioned heat-curing process.

A process for the preparation of a fiber-reinforced polyimide article using a prepreg comprising a reinforcing fibrous material and a terminal-modified polyimide oligomer having been produced by reaction of a biphenyltetracarboxylic acid or its derivative, an aromatic diamine and an unsaturated monoamine (particularly one having a triple bond at its terminal group) can be favorably performed using an organic solvent having a boiling point of 150 - 190° C (at atmospheric pressure), a heat of vaporization (at 25° C) in the range of 11 - 16 Kcal/mol., and a vapor pressure (at 25° C) of not higher than 3 mmHg in the manner comprising the steps of;

preparing a terminal-modified polyimide oligomer solution by dissolving the terminal-modified imide oligomer in the above-mentioned organic solvent;

impregnating the oligomer solution into a reinforcing fibrous material to obtain a prepreg;

combining a plurality of the pregreg to give a composite material;

shaping the composite material under pressure at 200 - 300° C.

Examples of the above-mentioned organic solvents include N,N-dimethylacetamide, N,N-diethylformamide, a mixture of N,N-dimethylacetamide and N,N-diethylformamide, and a mixture of N,N-dimethylacetamide and N,Ndimethylformamide.

The present invention will be further illustrated by the following examples.

In those examples, various properties are evaluated by the following tests.

(a) Logarithmic viscosity

A logarithmic viscosity (ηinh) was determined as follows. A sample polymer was homogeneously dissolved in N-methyl-2-pyrrolidone to prepare a polymer solution having a polymer concentration of 0.5 wt.%. The solution viscosity of the polymer solution and the viscosity of the solvent only were measured at 30 °C, and the obtained values were introduced into the following equation to calculate the logarithmic viscosity.

$$\eta\, inh = \frac{\ln\ (\text{solution viscosity/solvent viscosity})}{\text{polymer concentration}}$$

(b) Impregnation characteristics into reinforcing fibers

A N-methyl-2-pyrrolidone solution of each terminal-modified imide oligomer (solution viscosity: 20 poise) was impregnated into reinforcing fibers, and the impregnation characteristics were observed for examination.

(c) Tacking property (Tack) of prepreg

On an iron plate (width: 10. 2 cm, length: 20.3 cm) was tacked a prepreg (length: 7.6 cm, width: 7.6 cm), and other prepreg is further tacked thereon. The obtained laminated sheet was placed vertically and allowed to stand for 30 minutes at a temperature of 23 °C and a humidity of 50 %RH. The tacking property of the prepreg was evaluated by that the same condition (vertical condition) of the sheet was kept for that period or not. (AMS 3894)

(d) Draping property (Drape) of prepreg

The prepreg was placed on a surface of a half-round tube (diameter: 2.54 cm), and it was observed that the prepreg draped on the surface by gravity or not. (AMS 3894)

(e) Melt-flow property of resin within prepreg

A prepreg (10 cm x 10 cm) was heated at a heating rate of 5 °C/min, and the temperature at which the terminal-modified imide oligomer within the prepreg started to soften (softening-initiation temperature) was measured using a softening-initiation temperature measuring machine. Further, the fluidity of the imide oligomer was also evaluated at the softening-initiation temperature by judging the spreading area of the resin would be larger than 120 $cm^2$ or not when the prepreg was pressed at 7 $kg/cm^2$ for 30 minutes.

(f) Mechanical properties

Mechanical properties of the laminated composite (cured) were measured using Instron 1185 (trade name of Instron Co., Ltd.).

i)Bending test (three-point bending test)
span/thickness: 32
crosshead speed: 2 mm/min
temperature: 23 °C
humidity: 50 %RH (ASTM 790)

ii) Interlaminer shear strength (short beam method)
span/thickness: 4
crosshead speed: 2 mm/min
temperature: 23 °C
humidity: 50 %RH (ASTM 2344)

(g) Fiber content by volume (Vol %)

A matrix of the composite material was dissolved in conc. sulfuric acid to determine content by weight of the reinforcing fibers, and the density of the composite material was also measured. From the obtained values, the content of the fibers by volume in the composite material was calculated. (ASTM D 3171)

(h) Void content rate by volume (Vol %)

The sum of the fiber content by volume obtained as above and a resin content by volume calculated from the obtained fiber content was subtracted from 100 to determine the void content by volume. (ASTM D 2734)

(i) Thermal behavior

i) Thermal decomposition temperature

Thermal decomposition temperature was measured at a heating rate of 20 °C/min in air using DTA•TG analysis apparatus (produced by Daini Seikosha Co., Ltd.)

ii)Glass transition temperature

Glass transition temperature was measured using Rigaku TMA apparatus (produced by Rigaku Electric Co., Ltd.) according to a compression method (heating rate: 10 °C/min, weight: 10 g).

Example 1

Into a 500 mℓ-volume flask were charged 17.70 g of 1,3-bis(4-aminophenoxy)benzene (TPE-R), 35.63 g of 2,3,3′,4′-biphenyltetracarboxylic dianhydride (a-BPDA), 6.67 g of propargyl amine (PA) and 240 g of N-methyl-2-pyrrolidone (NMP), and they were stirred at 50 °C for one hour in a nitrogen gas stream. Then, the resulting reaction liquid was heated to 185 °C, then kept at the same temperature for one hour, and stirred to produce a terminal-modified imide oligomer in the reaction liquid.

The reaction liquid was cooled to room temperature, and then introduced into water to deposit an imide oligomer. The imide oligomer was collected by filtration, and washed with methanol of 25 °C twice. Thereafter, the imide oligomer was dried under reduced pressure to obtain a powdery terminal-modified imide oligomer (logarithmic viscosity at 25 °C: 0.068).

The powdery terminal-modified imide oligomer was dissolved in NMP to prepare a solution composition of terminal-modified imide oligomer having a polymer concentration of 40 wt.%.

The solution composition was impregnated into carbon fibers (Besfight HTA 3,000, trade name of Toho Rayon Co., Ltd.). Thus treated fibers were wound up using a drum winder, and drawn in one direction (UD). Then the fibers are dried at 100 °C for 0.5 hour to prepare a prepreg.

In the above impregnation stage, the solution composition was well impregnated into the carbon fibers.

The prepreg prepared as above had a volatile content of 7.2 wt.% and a resin content of 30.0 wt.%. The softening initiation temperature of the prepreg was 190 °C.

The obtained prepreg was excellent in both of the tacking property and the draping property.

Examples 2 - 5

The procedures of Example 1 were repeated except for using various terminal-modified imide oligomers having logarithmic viscosity (polymerization degree) set forth in Table 1, to prepare a variety of prepregs.

The properties of the obtained prepregs are set forth in Table 1.

## Examples 6 - 9

The procedures for preparing a terminal-modified imide oligomer in Example 1 were repeated except for using various aromatic diamine components set forth in Table 1, to prepare various terminal-modified imide oligomers.

Using the obtained terminal-modified imide oligomers, a variety of prepregs were prepared in the same manner as described in Example 1.

The properties of the obtained prepregs are set forth in Table 1.

## Example 10

The procedures for preparing a terminal-modified imide oligomer in Example 1 were repeated except for using 3,3′,4,4′-biphenyltetracarboxylic dianhydride (s-BPDA) instead of a-BPDA, to prepare a terminal-modified imide oligomer.

Using the obtained terminal-modified imide oligomer, a prepreg was prepared in the same manner as described in Example 1.

The properties of the obtained prepreg are set forth in Table 1.

## Example 11

The prepreg of 260 µm thick obtained in Example 4 was cut to give sheets of rectangle form (length: 260 mm, width: 90 mm), and the sheets were laminated one upon another in the same direction (direction of 0°) and combined with each other under pressure. The obtained laminated sheet was heated to 195°C in an autoclave and kept at the same temperature for 2 hours. Then, the sheet was again heated to 330°C and kept at the same temperature for 8 hours. Finally, the sheet was cooled to 80°C and pressure was released, to produce a molded product of composite material in the laminated form. The obtained molded product was further heated at 370°C for 16 hours to cure (post-cure) the product.

The obtained molded product (composite material) was cut to give a test strip (length in fiber direction: 85 mm, width: 12.7 mm) for bending test and a test strip (length in fiber direction: 28 mm, width: 12.7 mm) for a test for interlaminer shear strength.

Using the test strips, flexural strength and flexural modulus in bending test, interlaminer shear strength, fiber content by volume, void content by volume, thermal decomposition initiation temperature and glass transition temperature were measured according to the aforementioned tests.

The results are set forth in Table 2.

## Examples 12 & 13

The procedures of Example 11 were repeated except for using each of the imide oligomers obtained in Examples 3 and 9, to produce molded products.

The properties of the obtained molded products are set forth in Table 2.

## Comparison Examples 1 & 2

Terminal-modified imide oligomers were prepared in the same manner as described in Example 1, except for using 3,3′,4,4′-benzophenonetetracarboxylic dianhydride (BTDA) instead of a-BPDA and using aromatic diamine components set forth in Table 1.

Using the terminal-modified imide oligomer obtained in Comparison Example 1 which had a logarithmic viscosity set forth in Table 1, a prepreg was prepared in the same manner as described in Example 1. The properties of the obtained prepreg are set forth in Table 1.

The terminal-modified imide oligomer obtained in Comparison Example 2 had a logarithmic viscosity set forth in Table 1. However, since the imide oligomer was not substantially dissolved in NMP, it was impossible to impregnate an imide oligomer solution into the reinforc ing fibers, so that any prepreg was not obtained.

## Comparison Examples 3 & 4

Terminal-modified imide oligomers were prepared in the same manner as described in Example 1, except for using pyromellitic anhydride (PMDA) instead of a-BPDA and using aromatic diamine components set forth in Table 1.

Each of the terminal-modified imide oligomers obtained in Comparison Examples 3 and 4 had a logarithmic viscosity set forth in Table 1. However, since each of the imide oligomers was not substantially dissolved in NMP, it was impossible to impregnate an imide oligomer solution into the reinforcing fibers, so that any prepreg was not obtained.

## Comparison Example 5

The procedures of Example 11 was repeated except for using the prepreg obtained in Comparison Example 1, to prepare a test strip of the molded product of composite material.

The results on the evaluation of various properties of the molded product (test strip) are set forth in Table 2.

Table 1 (1)

| | Starting Material for Imide Oligomer | | | Logarithmic Viscosity of Oligomer (30°C) |
|---|---|---|---|---|
| Example | Acid Dianhydride | Aromatic Diamine | Unsaturated Monoamine | |
| 1 | a-BPDA | TPE-R | PA | 0.068 |
| 2 | a-BPDA | TPE-R | PA | 0.084 |
| 3 | a-BPDA | TPE-R | PA | 0.100 |
| 4 | a-BPDA | TPE-R | PA | 0.134 |
| 5 | a-BPDA | TPE-R | PA | 0.178 |
| 6 | a-BPDA | DETDA | PA | 0.060 |
| 7 | a-BPDA | BAPP | PA | 0.070 |
| 8 | a-BPDA | 3-BAPS | PA | 0.073 |
| 9 | a-BPDA | 3-BAPS | PA | 0.111 |
| 10 | s-BPDA | TPE-R | PA | 0.068 |
| Com. Ex. | | | | |
| 1 | BTDA | DETDA | PA | 0.060 |
| 2 | BTDA | TPE-R | PA | --- |
| 3 | PMDA | DETDA | PA | --- |
| 4 | PMDA | TPE-R | PA | --- |

Note:

DETDA: a mixture of 3,5-diethyltoluene-2,4-diamine (74 - 80 wt.%) and 3,5-diethyltoluene-2,6-diamine (18 - 24 wt.%)

BAPP: 2,2-bis[4-(4-aminophenoxy)phenyl]propane

3-BAPS: bis[4-(aminophenoxy)phenyl]sulfone

Table 1 (2)

| Example | Impregnation Characteristics of Oligomer | Properties of Prepreg | | | |
|---|---|---|---|---|---|
| | | Tacking Property | Draping Property | Melt-Flow Ability | Softening Initiation Tem. (°C) |
| 1 | AA | AA | AA | AA | 190 |
| 2 | AA | AA | AA | AA | 195 |
| 3 | AA | AA | AA | AA | 200 |
| 4 | AA | AA | AA | AA | 215 |
| 5 | AA | AA | AA | AA | 245 |
| 6 | AA | AA | AA | AA | 175 |
| 7 | AA | AA | AA | AA | 180 |
| 8 | AA | AA | AA | AA | 183 |
| 9 | AA | AA | AA | AA | 198 |
| 10 | AA | AA | AA | AA | 195 |
| Com. Ex. 1 | AA | AA | AA | CC (high viscosity) | 170 |
| 2 | CC(insoluble) | -- | -- | -- | -- |
| 3 | CC(insoluble) | -- | -- | -- | -- |
| 4 | CC(insoluble) | -- | -- | -- | -- |

Note:

The symbol "AA" means excellent condition on each property, and the symbol "CC" means bad condition on each property.

Table 2

| | Ex. 11 | Ex. 12 | Ex. 13 | Com. Ex. 5 |
|---|---|---|---|---|
| Fiber Content (Vf) (% by volume) | 60 | 60 | 60 | 60 |
| Void Content (Vv) (% by volume) | 0.3 | 0.6 | 0.6 | 6.0 |
| Flexural Strength ($kgf/mm^2$) | 200 | 190 | 180 | 100 |
| Flexural Modulus ($tf/mm^2$) | 13.1 | 13.5 | 12.5 | 8.5 |
| Interlaminer Shear Strength ($kgf/mm^2$) | 10.2 | 9.0 | 8.8 | 7.3 |
| Thermal Decompn. Temp. (°C) | 577 | 534 | 539 | 570 |
| Glass Transition Temp. (°C) | 260 | 267 | 270 | 240 |

Example 14

Into a 500 mℓ-volume flask were charged 87.70 g of 1,3-bis(4-aminophenoxy)benzene (TPE-R), 105.92 g of 2,3,3′,4′-biphenyltetracarboxylic dianhydride (a-BPDA), 6.67 g of propargyl amine (PA) and 240 g of N-methyl-2-pyrrolidone (NMP), and they were stirred at 50°C for one hour in a nitrogen gas stream. Then, the resulting reaction liquid was heated to 185°C, then kept at the same temperature for one hour, and stirred to produce a terminal-modified imide oligomer in the reaction liquid.

The reaction liquid was cooled to room temperature, and then introduced into water to deposit an imide oligomer. The imide oligomer was collected by filtration, and twice washed with methanol of 25°C. Thereafter, the imide oligomer was dried under reduced pressure to obtain a powdery terminal-modified imide oligomer (logarithmic viscosity at 25°C: 0.134).

The powdery terminal-modified imide oligomer was dissolved in N,N-dimethylacetamide (DMAc, b.p.: 166.1°C at atmospheric pressure, heat of vaporation at 25°C: 12.7 Kcal/mol., vapor pressure at 25°C: 1.3 mmHg) to prepare a solution composition of terminal-modified imide oligomer having a polymer concentration of 40 wt.% and a solution viscosity of 23 poise at 25°C.

The solution composition was impregnated into carbon fibers (Besfight HTA 3,000, trade name of Toho Rayon Co., Ltd.) at 25°C and 50 %RH. Thus treated fibers were wound up using a drum winder, and drawn in one direction (UD). Then the fibers were dried at 100°C for 0.5 hour to prepare a prepreg.

In the above impregnation stage, the solution composition was well impregnated into the carbon fibers.

The prepreg prepared as above had a volatile content of 7.2 wt.% and a resin content of 30.0 wt.%. The softening initiation temperature of the prepreg was 215°C.

The obtained prepreg was excellent in both of the tacking property and the draping property.

The prepreg of 260 µm thick obtained above was cut to give sheets of rectanglar form (length: 260 mm, width: 90 mm), and the sheets were laminated one upon another in the same direction (direction of 0°) and combined with each other under pressure (up to 8.5 kg/cm$^2$). Thus obtained laminated sheet was heated to 180°C in an autoclave and kept at the same temperature for 2 hours. Then, the sheet was again heated to 250°C and kept at the same temperature for 4 hours. Finally, the sheet was cooled to 80°C and pressure was released, to produce a molded product of composite material in the laminated form.

The obtained molded product was further heated at 300°C for 2 hours to cure (post-cure) the product.

The obtained molded product (composite material) was cut to give a test strip (length in fiber direction: 85 mm, width: 12.7 mm) for bending test and a test strip (length in fiber direction: 28 mm, width: 12.7 mm) for a test for interlaminer shear strength.

Using the test strips, flexural strength and flexural modulus in the bending test, interlaminer shear strength, fiber content by volume, void content by volume, thermal decomposition initiation temperature and glass transition temperature were measured according to the aforementioned tests.

The results are set forth in Table 3.

## Example 15

The procedures of Example 14 were repeated except for using N,N-diethylformamide (DEF, b.p.: 178.0°C at atmospheric pressure, heat of vaporation at 25°C: 11.8 Kcal/mol., vapor pressure at 25°C: 1.2 mmHg) in place of N,N-dimethylacetamide.

The results are set forth in Table 3.

Table 3

| | Ex. 14 | Ex. 15 |
|---|---|---|
| Fiber Content (Vf) (% by volume) | 60 | 60 |
| Void Content (Vv) (% by volume) | 0.2 | 0.3 |
| Flexural Strength (kgf/mm$^2$) | 211 | 200 |
| Flexural Modulus (tf/mm$^2$) | 9.0 | 9.0 |
| Interlaminer Shear Strength (kgf/mm$^2$) | 10.7 | 10.0 |
| Thermal Decompn. Temp. (°C) | 570 | 570 |
| Glass Transition Temp. (°C) | 262 | 260 |

**Claims**

1. A prepreg comprising a terminal-modified imide oligomer and a reinforcing fiber, wherein said imide oligomer is a product of reaction of a biphenyltetracarboxylic acid or its derivative, an aromatic diamine and an unsaturated monoamine.

2. The prepreg as claimed in claim 1, which further contains an organic solvent in an amount of 1 - 30 wt.%.

3. The prepreg as claimed in claim 1, wherein said biphenyltetracarboxylic acid or it derivative is 3,3′,4,4′- or 2,3,3′,4′-biphenyltetracarboxylic acid or its acid dianhydride or ester.

4. The prepreg as claimed in claim 1, wherein said terminal-modified imide oligomer has a logarithmic viscosity in the range of 0.01 to 0.8.

5. The prepreg as claimed in claim 1, wherein said terminal-modified imide oligomer has a melting point in the range of 50 to 300 °C.

6. The prepreg as claimed in claim 1, wherein said unsaturated monoamide contains a triple bond at its terminal group.

7. The prepreg as claimed in claim 1, wherein said terminal-modified imide oligomer has the following formula:

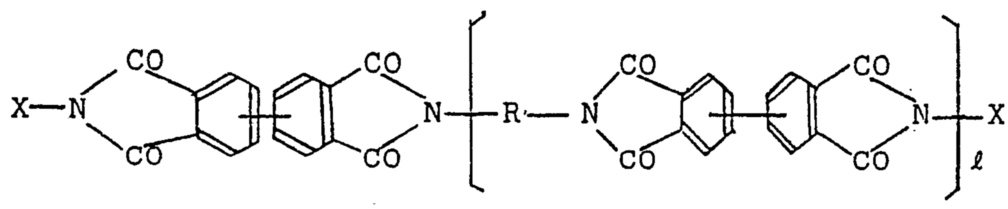

wherein X is a monovalent group which is formed by removing an amino group from the unsaturated monoamine; ℓ is an integer of 1 to 80; and R is a divalent group which is formed by removing an amino group from the aromatic diamine.

8. A process for the preparation of a fiber-reinforced polyimide article comprising the steps of:
preparing a terminal-modified polyimide oligomer solution by dissolving a terminal-modified imide oligomer having been produced by reaction of a biphenyltetracarboxylic acid or its derivative, an aromatic diamine and an unsaturated monoamine in an organic solvent;
impregnating the oligomer solution into a reinforcing fibrous material to obtain a prepreg;
combining a plurality of the pregreg to give a composite material;
shaping the composite material under pressure at 200 - 300 °C.

9. The process as claimed in claim 8, wherein said organic solvent has a boiling point of 150 - 190 °C, a heat of vaporization at 25 °C in the range of 11 - 16 Kcal/mol., and a vapor pressure at 25 °C of not higher than 3 mmHg.

10. The process as claimed in claim 8, wherein said prepreg contains an organic solvent in an amount of 1 -30 wt.%.

11. The process as claimed in claim 8, wherein said biphenyltetracarboxylic acid or it derivative is 3,3′,4,4′- or 2,3,3′,4′-biphenyltetracarboxylic acid or its acid dianhydride or ester.

12. The process as claimed in claim 8, wherein said unsaturated monoamide contains a triple bond at its terminal group.

13. The process as claimed in claim 8, wherein said terminal-modified imide oligomer has the following formula:

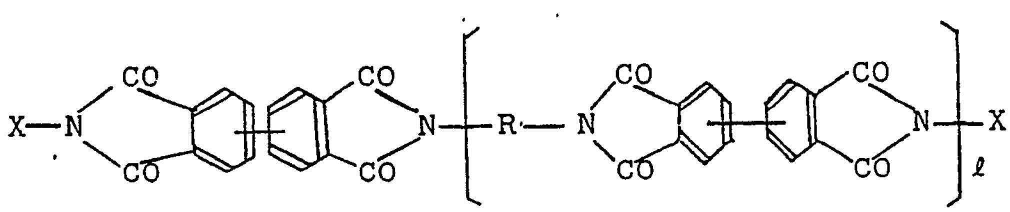

wherein X is a monovalent group which is formed by removing an amino group from the unsaturated monoamine; ℓ is an integer of 1 to 80; and R is a divalent group which is formed by removing an amino group from the aromatic diamine.

European Patent Office

# EUROPEAN SEARCH REPORT

Application Number

EP 88 11 9804

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | CHEMICAL ABSTRACTS, vol. 109, no. 26, 26th December 1988, page 42, abstract no. 232122p, Columbus, Ohio, US; & JP-A-63 75 034 (AGENCY OF INDUSTRIAL SCIENCES AND TECHNOLOGY) 05-04-1988<br>--- | | C 08 J 5/24<br>C 08 L 79/08<br>C 08 G 73/10 |
| A | US-A-4 297 467 (P.A. WAITKUS et al.)<br>----- | | |
| | | | **TECHNICAL FIELDS SEARCHED (Int. Cl.4)** |
| | | | C 08 J<br>C 08 G |

The present search report has been drawn up for all claims

| Place of search | Date of completion of the search | Examiner |
|---|---|---|
| THE HAGUE | 13-03-1989 | LEROY ALAIN |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)